# FASCICULE DE BREVET EUROPEEN

(11) **EP 1 841 170 B1**
(45) Date de publication et mention de la délivrance du brevet: **13.10.2010**
(21) Numéro de dépôt: 06300303.2
(22) Date de dépôt: 30.03.2006
(51) Int. Cl.: H04L 29/06, H04L 29/12

(54) **Apprentissage du délai d'expiration d'une association d'adresses au sein d'un dispositif de traduction d'adresses pour serveur de signalisation SIP**
Erlernen der Abmeldungszeit einer Adressverbindung in einer Adressenübersetzungsvorrichtung für einen SIP-Signalisierungsserver
Learning address binding expiry time in an address translation device for a SIP signalling server

(43) Date de publication de la demande: 03.10.2007
(73) Titulaire: Alcatel Lucent, 75008 Paris (FR)
(72) Inventeur: Levy, Thomas, 75013 PARIS (FR); Jaupitre, Gaelle, 75015 PARIS (FR)
(74) Mandataire: Chaffraix, Sylvain

(56) Documents cités:
- US-A1- 2005 286 519
- ROSENBERG J WEINBERGER DYNAMICSOFT C HUITEMA MICROSOFT R MAHY CISCO J: "STUN - Simple Traversal of User Datagram Protocol (UDP) Through Network Address Translators (NATs); rfc3489.txt;" IETF STANDARD, INTERNET ENGINEERING TASK FORCE, IETF, CH, mars 2003 (2003-03), XP015009272 ISSN: 0000-0003

## Description

La présente invention concerne la transmission de flux multimédias par un réseau de communication de données. Elle s'applique particulièrement à la téléphonie sur IP (*Internet Protocol*), à la vidéophonie sur IP, etc.

Ces applications nécessitent le plus souvent l'établissement d'une session entre les parties. Ces parties sont le plus souvent des terminaux multimédia comme des terminaux de télécommunication (terminaux GSM, UMTS etc.), des assistants numériques personnels (PDA pour *Personal Digital Assistant),* des ordinateurs etc.
Cette session est établie par une partie dite « appelante » qui « invite » d'autres parties à joindre la session. Les invitations, ainsi que d'autres messages de signalisation, sont habituellement véhiculées par un protocole de signalisation comme le protocole SIP (*Session Initiation Protocol*) défini par le RFC 3261 de l'IETF (*Internet Engineering Task Force*).
Ces messages de signalisation SIP sont transmis à travers le réseau de communication à l'aide de serveurs de signalisation, communément appelés « *proxy servers* ». Ces serveurs de signalisation ont pour but principal d'interpréter les adresses contenues dans les messages de signalisation afin de les adresser à la partie destinatrice.

Afin que les serveurs de signalisation puissent disposer de la connaissance suffisante du réseau de communication, les terminaux doivent s'enregistrer auprès de leur serveur de signalisation. De cette façon, chaque serveur de signalisation connaît les terminaux qui lui sont rattachés et les messages de signalisation (et les appels) peuvent être convenablement transmis à travers le réseau de communication. Un tel enregistrement est typiquement effectué par le message d'enregistrement « Register » du protocole SIP.
Ce protocole comporte également un message nommé « Invite » qui permet à la partie appelante d'initialiser une session avec une partie appelée.

Le réseau global de communication (que l'on nomme communément « Internet ») peut être vu comme une interconnexion de réseaux privés de communication. Ces réseaux privés peuvent être par exemple des réseaux de communication d'entreprise. Ils sont connectés ensemble via un ou plusieurs réseaux de communication gérés par des opérateurs de communication.

Très souvent, les réseaux privés et le réseau public sont connectés par un dispositif de traduction d'adresses, nommé NAT (*Network Address Translation*) et décrit dans le RFC 3022 de l'IETF. Le but d'un tel dispositif est d'établir une association entre les adresses privées, d'usage uniquement interne au réseau privé, et des adresses publiques qui sont utilisés au sein du réseau public.
Parmi ces dispositifs NAT, il existe également des dispositifs de traduction d'adresses et de ports (NAPT pour « *Network Address and Port Translation* ») qui considèrent en sus des adresses IP, les ports indiqués dans les paquets IP. Dans ce qui suit, pour la facilité de la lecture, on considérera que l'acronyme NAT recouvre également les dispositifs NAPT ou autres dispositifs similaires : NAT bidirectionnels, NAPT à redirection des flux entrants (« *NAPT Redirect*/*Port Forwarding* »), NAT « double » (« *Twice-NAT »)* etc.
Toujours par soucis de clarté, nous appellerons « coordonnées », l'ensemble des informations contenues dans les paquets IP qui sont utilisées par un dispositif de type NAT pour identifier un équipement ou une application (adresses IP, ports...).

Le dispositif de traduction d'adresses dispose d'un jeu d'adresses publiques, habituellement en nombre beaucoup plus restreint que les terminaux connectés au réseau privé. Lorsqu'un de ces terminaux souhaite accéder au réseau public, le dispositif de traduction d'adresses NAT lui attribue une adresse publique parmi celles encore disponible dans son jeu d'adresse publique.
Dans le cadre d'un NAPT (*Network Address and Port Translation*)*,* il peut utiliser une même adresse publique pour plusieurs adresses privées. Dans ce cas, l'association est effectuée non seulement sur la base des adresses IP mais également sur les ports utilisés ou autres informations (protocoles etc.). Cette association entre les coordonnées privées et publiques est réalisée, de façon temporaire. Du point de vue du réseau public, ce terminal possède alors les coordonnées publiques attribuées par le dispositif de traduction d'adresses NAT (ou NAPT...) et ses coordonnées privées sont alors transparentes pour le réseau public.
Cette association (ou liaison, « *binding* » en langue anglaise) est nécessairement temporaire, afin de ne pas monopoliser les adresses publiques du jeu d'adresses publiques. Aussi, après un certains lapse de temps d'inutilisation, l'association est terminée et l'adresse publique attribuée redevient disponible pour une nouvelle mise en correspondance.
Cette inutilisation survient par exemple lorsqu'une connexion TCP (*Transport Communication Protocol*) est terminée entre des parties de part et d'autre d'un dispositif de traduction d'adresses NAT. À sa terminaison, et après l'écoulement de ce lapse de temps, appelée délai d'expiration, l'association est terminée et si les deux parties souhaitent à nouveau communiquer, il leur faudra établir une nouvelle association. Cet aspect du fonctionnement d'un dispositif de traduction d'adresses est par exemple expliqué dans le document « *NAT Behavioral Requirements of Unicast UDP* », publié en septembre 2006 et disponible sur le site de l'IETF.

Un problème se pose avec le protocole SIP. En effet, celui-ci est basé sur le protocole de plus bas niveau UDP (*User Datagram Protocol*) qui, contrairement à TCP, n'implique pas l'établissement d'une connexion de bout en bout entre les parties. Avec l'utilisation du protocole TCP, il faut donc une action positive de la part d'une des parties pour interrompre la connexion TCP pour que l'association soit terminée au sein du dispositif de traduction d'adresses NAT. Mais avec l'utilisation du protocole UDP, l'association peut se terminer sans action positive, simplement par la non émission de paquets de données durant une période au moins égale au délai d'expiration.

La demanderesse a remarqué que cela posera un problème grandissant avec l'utilisation croissante du protocole SIP pour l'établissement de sessions multimédias.
Ce protocole SIP étant basé sur UDP, l'absence ou l'insuffisance de trafic de signalisation durant une session multimédia entraîne l'interruption de la session par la terminaison de l'association du dispositif de traduction d'adresses NAT.
Actuellement, ce problème est partiellement résolu par la fixation manuelle de la durée de validité des messages de signalisation du protocole SIP afin que les clients se re-enregistrent selon une périodicité inférieure au délai d'expiration du dispositif de traduction d'adresses NAT. En effet, le protocole SIP prévoit que les clients ne s'enregistrent que temporairement auprès d'un serveur de signalisation. Le message d'enregistrement « Register » comporte donc un paramètre permettant de préciser durée de validité au-delà de laquelle le serveur de signalisation interrompt sa « connexion » avec le client.
Aussi, si le client veut demeurer constamment connecté avec le serveur de signalisation, et accessible par l'ensemble du réseau de communication, il doit re-émettre périodiquement des messages d'enregistrement « Register ».

Dans US 2005/0286519 A1, un serveur d'accès indique à un client SIP d'envoyer des messages périodiques afin de maintenir la connexion au niveau du dispositif NAT.

Cette durée de validité est habituellement négociée entre le client et le serveur de signalisation, mais elle peut être également fixée manuellement par l'opérateur.
Cette durée de validité des messages de signalisation SIP peut être fixée à une valeur délibérément courte, afin de garantir la non terminaison de l'association du dispositif de traduction d'adresses NAT.
L'opérateur peut aussi se baser sur les données constructeurs du dispositif de traduction d'adresses NAT, ou procéder à une étude statistique, afin de déterminer une valeur plus optimale de la durée de validité mieux en rapport avec le délai d'expiration de ce dispositif.

Ces procédés souffrent toutefois de graves inconvénients.

Tout d'abord, ils nécessitent l'intervention manuelle de l'opérateur. Il s'agit là d'une tâche coûteuse pour l'opérateur et susceptible de provoquer des erreurs de configuration. Par exemple, si le dispositif de traduction d'adresses est changé, il faut penser à modifier la valeur de la durée de validité en fonction.
En outre, le choix d'une valeur trop faible pour la durée de validité des messages de signalisation SIP charge le réseau de communication par l'émission d'un nombre trop important de messages d'enregistrement « Register ».
Ces différents problèmes sont assez peu sensibles aujourd'hui, mais selon la demanderesse, seront amenés à prendre une importance plus cruciale à mesure que se développe l'utilisation du protocole SIP pour l'établissement de sessions multimédias.

La présente invention propose de résoudre ces problèmes, en adaptant le serveur de signalisation pour qu'il détermine de façon automatique une valeur optimale du délai d'expiration du dispositif de traduction d'adresses, et pour qu'il l'applique comme durée de validité des messages d'enregistrement « Register » du protocole SIP.

Plus précisément, l'invention a pour objets un serveur de signalisation comprenant des moyens de transmission de messages de signalisation SIP avec un client à travers un dispositif de traduction d'adresses NAT réalisant une association temporaire d'une adresse publique à l'adresse privée dudit client. Ce serveur comporte des moyens pour recevoir des messages d'enregistrement provenant de ce client, et pour lui adresser une durée de validité au bout de laquelle il doit transmettre un nouveau message d'enregistrement au serveur de signalisation.
Selon l'invention, ce serveur de signalisation se caractérise en ce qu'il dispose :
- de moyens pour détecter que le client est situé derrière un dispositif de traduction d'adresse NAT et,
- pour, dans cette situation, déterminer le délai approximatif d'expiration de l'association temporaire par envoi successif de messages de test après un délai d'attente croissant jusqu'à détection de la terminaison de ladite association, et
- des moyens pour, à l'issue de cette détermination, transmettre au client ce délai approximatif d'expiration comme durée de validité.

Ainsi, la détermination automatique permet d'éviter l'utilisation d'un opérateur humain, et de réduire à la fois les coûts et les sources d'erreur. Elle permet aussi une meilleure optimisation de la durée de validité qui permet le compromis idéal entre la non-terminaison de l'association du dispositif de traduction d'adresses et la charge du réseau de communication.

Selon une mise en oeuvre de l'invention, durant une phase d'apprentissage, les messages de réponses aux messages d'enregistrement contiennent une durée de validité légèrement supérieure au délai d'attente avant l'émission du prochain message de test.
Selon un mode de réalisation de l'invention, la phase d'apprentissage se termine lorsque aucune réponse n'est reçue à un message de test.
Selon un mode de réalisation, les messages de test sont des messages « Options ».
Enfin, les messages de réponse peuvent être des messages « 200 Ok » et les durées de validité peuvent être contenus dans un champ « Expires » de ces messages, ou dans un paramètre « Expires » d'un champ « Contacts » de ces messages.

L'invention a également pour objet un procédé de connexion d'un serveur de signalisation avec un client à travers un dispositif de traduction d'adresses réalisant une association temporaire d'une adresse publique à l'adresse privée du client, consistant à transmettre des messages d'enregistrement du client vers le serveur de signalisation, et à adresser au client une durée de validité au bout de laquelle il doit transmettre un nouveau message d'enregistrement au serveur de signalisation. Ce procédé se caractérise en ce qu'il comporte en outre
- une étape de détection, par le serveur de signalisation, que le client est situé derrière un dispositif de traduction d'adresse ; et
- dans cette situation, une étape d'apprentissage consistant à déterminer le délai approximatif d'expiration de ladite association temporaire par envoi successif de messages de test après un délai d'attente croissant jusqu'à détection de la terminaison de l'association, et
- une étape d'utilisation, à l'issue de cette détermination, consistant à transmettre au client ce délai approximatif d'expiration comme durée de validité.

L'invention et ses avantages apparaîtront de façon plus claire dans la description qui va suivre en liaison avec les figures annexées :
La figure 1 schématise l'architecture générale dans laquelle s'inscrit le serveur de signalisation selon l'invention.
La figure 2 représente les flux d'échanges entre les différentes parties à la communication, selon l'invention.

Ainsi qu'indiqué précédemment, l'invention s'inscrit dans le cadre d'une session multimédia établie entre un terminal T, situé dans un réseau privé PRI et un second terminal non représenté situé. On entend par terminal tout équipement de communication permettant d'établir une session multimédia, c'est-à-dire de voix sur IP, de vidéo-phonie etc. Il peut s'agir d'un terminal mobile, conforme aux normes UMTS (*Universal Mobile Telecommunications System*) ou GPRS (*Global Packet Radio System*) par exemples, ou un assistant personnel numérique (PDA pour *Personal Digital Assistant),* un micro-ordinateur, un dispositif tel ceux vendus par la société Blackberry^{™} etc.
Dans le vocabulaire propre au protocole SIP, ces terminaux sont considérés comme des clients. Dans la suite, les termes « client » et « terminal » seront considérés comme équivalents.

Ce second terminal (ou client) est typiquement connecté à un autre réseau privé, également non représenté. Dans le cas d'une conférence multi-partie, plusieurs autres terminaux peuvent être parties à la session multimédia.
Le réseau public PUB comporte un serveur de signalisation SS qui permet l'acheminement des messages de signalisation échangés entre les parties.

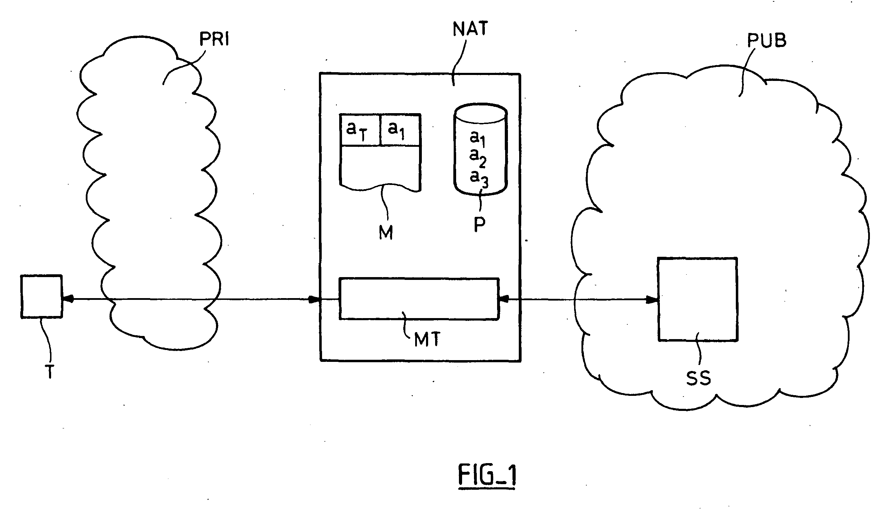

La figure 1 illustre essentiellement la partie de l'architecture des réseaux de communication qui relient ce serveur de signalisation SS et un terminal de communication T.

Les deux réseaux de communication PRI et PUB sont inter-connectés par (au moins) un dispositif de traduction d'adresses NAT. Les messages de signalisation échangés entre le terminal T et le serveur de signalisation SS sont donc transmis à travers ce dispositif de traduction d'adresses NAT.

Au sein du réseau privé PRI, les terminaux et noeuds disposent d'adresses attribuées indépendamment du réseau global. Autrement dit, aucune garantie n'est prise pour savoir si une adresse a déjà été attribuée ailleurs dans le monde. Le dispositif de traduction d'adresses NAT a pour but d'isoler le réseau privé PRI en faisant en sorte que les adresses privées ne soient jamais utilisées dans les communications avec le réseau public PUB.

Le dispositif de traduction d'adresses NAT dispose d'un ensemble P (ou « pool » en langue anglaise) d'adresses publiques disponibles a₁, a₂, a₃. Ces adresses, utilisables au sein de l'ensemble du réseau public PUB, sont fournies par l'IANA (*Internet Assigned Numbers Authority*) qui est l'organisme en charge de l'élaboration des plans d'adressage et de l'attribution unique des adresses publiques au sein du réseau public.
Lorsque le terminal T souhaite communiquer en dehors du réseau privé PRI, et le serveur de signalisation SS lui attribue une des adresses disponibles a₁ dans l'ensemble P d'adresses publiques, ainsi que dans le cas d'un dispositif de type NAPT, un port. Cette association est mémorisée au sein d'une table d'association M (pour « Map » en langue anglaise).
Le dispositif de traduction d'adresses dispose en outre de moyens de traductions MT pour traduire dans les deux sens les champs des paquets IP relatifs aux coordonnées du terminal T, et pour ajuster en conséquence les champs de codes de correction (« *checksum* »). Ainsi, les paquets provenant du terminal T auront, en sortie du dispositif de traduction d'adresses NAT, l'adresses source a₁. Inversement, les paquets provenant du serveur de signalisation SS et adressés à ce terminal T auront comme adresses de destination α₁; la seule qui soit connue de ce serveur. Les moyens de traduction MT du dispositif de traduction d'adresses NAT utilisent alors la table de correspondance M pour modifier les champs de sorte que les paquets ressortent par l'interface du réseau privé PRI avec comme adresse de destination, l'adresse privée α_{T}. Ces paquets peuvent alors être correctement acheminés au sein du réseau privé PRl jusqu'au terminal destinataire T.

Le dispositif de traduction d'adresses NAT possède en outre un compteur lui permettant de mesurer le temps durant lequel une association n'est pas utilisée. À expiration de ce délai d'expiration, l'association se termine.

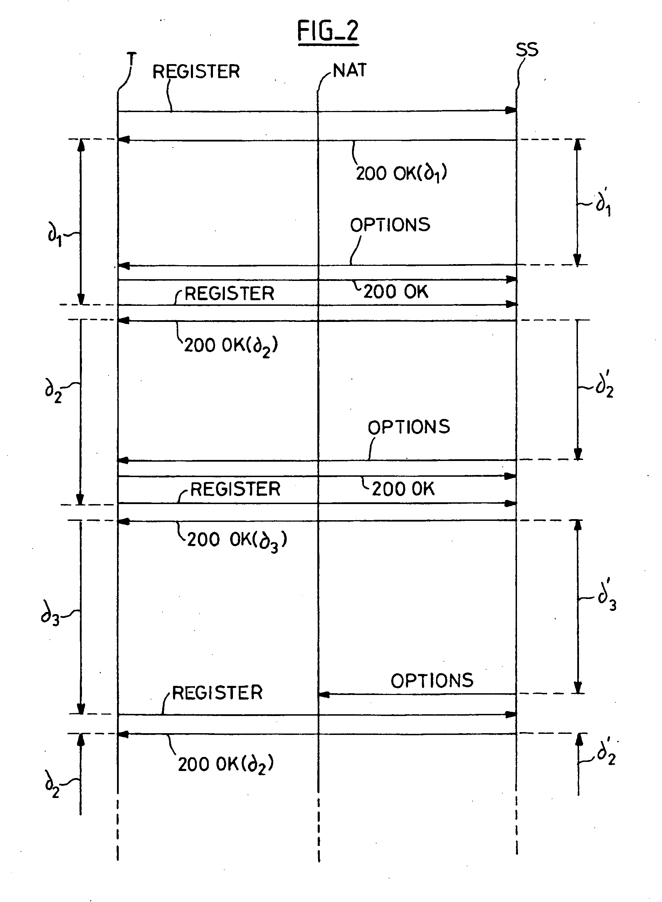

La figure 2 illustre les flux de messages de signalisation entre les parties à la communication. Cette figure possède un axe temporel orienté vers le bas. Chaque ligne verticale est représentative d'un élément de réseau : la ligne la plus à gauche représente le terminal T, la ligne du milieu le dispositif de traduction d'adresses NAT et la ligne de droite, le serveur de signalisation SS.
Les flèches horizontales représentent les messages de signalisation. Comme on le verra par la suite, ces message de signalisation peuvent être de différentes natures : des messages d'enregistrement « Register », des messages de test « Options », des messages de réponse « 200 Ok » etc. et d'autres types non utilisés dans l'invention. Du point de vue du vocabulaire, il est important de noter que le message de signalisation « Options » n'est pas en général un message de test : il véhicule cette signification uniquement dans le cadre de la présente invention.

Le premier message est un message d'enregistrement. Selon le protocole SIP, il peut s'agir d'un message « Register » tel que décrit au paragraphe 10 du RFC 3261 sus-mentionné.

Ce message permet au terminal T de se faire connaître du serveur de signalisation SS afin que celui-ci l'intègre dans sa base d'information regroupant l'ensemble des terminaux (plus généralement « clients SIP ») connus par ce serveur de signalisation SS.
Ce message comporte un entête comprenant un ensemble de champs obligatoires. Ainsi qu'indiqué au paragraphe 8.1 du paragraphe du RFC 3261, un message SIP doit comporter au moins les champs suivants : « To », « From », CSeq », « Call-ID », « Max-Forwards » et « Via ». En outre, un champ « Contact » peut être incorporé dans le message d'enregistrement « Register ». Les informations contenues dans le RFC 2361 relatives aux différents champs des messages du protocole SIP sont à la portée de l'homme du métier.

Le protocole SIP prévoit qu'une durée de validité du message d'enregistrement « Register » soit indiqué dans ce message. Il propose deux façons de préciser cette information :
- la durée de validité peut être indiquée dans un champ supplémentaire nommé « Expires », décrit au paragraphe 20.19 du RFC 3261 ;
- la durée de validité peut être indiquée dans un paramètre « Expires » du champ « Contact » ainsi que précisé dans les sections 10.2 et 20.10 de ce même RFC 3261.

Par défaut, les clients SIP (i.e. le terminal T) ne proposent pas de durée de validité.

À la réception de ce message d'enregistrement « Register », le serveur de signalisation SS analyse les champs du message et peut déterminer que le terminal émetteur T est situé derrière un dispositif de traduction d'adresses NAT. Cette détermination peut par exemple être faite par l'analyse du contenu du champ « Via » de l'entête.
Ainsi qu'explicité au paragraphe 8.1.1.7 du RFC 3261, le champ « Via » indique les noeuds de réseau par lesquels le message est transmis. En analysant le ou les champs « Via », il est tout à fait possible de déterminer qu'un message d'enregistrement est passé par un dispositif de traduction d'adresses NAT, et même de connaître son adresse.

Si le serveur de signalisation SS détecte que le client T est situé derrière un dispositif de traduction d'adresse NAT, une phase d'apprentissage d'une durée de validité optimale est déclenchée.

Pour ce faire, le serveur de signalisation détermine une approximation du délai d'expiration de l'association par envoi successif de messages de test avec un délai croissant jusqu'à détection de la terminaison de l'association.

Le serveur de signalisation SS répond tout d'abord au message d'enregistrement par un message de réponse « 200 Ok » spécifiée dans le protocole SIP par le RFC 3261. Ce message de réponse comporte une durée de validité fixée à une première valeur d₁. Cette première valeur d₁ est fixée de sorte qu'il soit assuré qu'elle soit inférieure au délai d'expiration de l'association du dispositif de traduction d'adresses NAT. Cette valeur est donc délibérément peu élevée, par exemple de l'ordre de 15 secondes.

Comme pour le message d'enregistrement « Register », le message de réponse « 200 ok » peut contenir la valeur d₁ en (au moins) deux emplacements différents, ouvrant la possibilité de deux modes de réalisation de l'invention :
- Dans un premier mode de réalisation, la durée de validité est transmise dans le champ « Expires » du message de réponse « 200 Ok ».
- Dans un seconde mode de réalisation, la durée de validité est indiquée dans un paramètre « Expires » du champ « Contact ».

Le client T est donc instruit par ce message de réponse « 200 Ok » qu'il doit re-émettre un message d'enregistrement « Register » au bout d'un délai d₁.
Parallèlement, le serveur de signalisation SS attend durant un délai d₁' légèrement inférieur au premier délai de validité d₁ avant d'émettre un message de test vers le client T.
Plus généralement, durant toute la phase d'apprentissage, les messages de réponses aux messages d'enregistrement contiennent une durée de validité légèrement supérieure au délai d'attente avant l'émission du prochain message de test.

Ce message de test vise à vérifier si l'association d'adresses au sein du dispositif de traduction d'adresses NAT est encore active ou non.

Il peut être mis en oeuvre par le message « Options » du protocole SIP qui permet à une partie de requérir les capacités d'une autre partie.
Un message « Options » comporte les mêmes champs qu'un message d'enregistrement « Register ». Il peut également posséder un champ « Contact ».

Si l'association est encore effective au sein du dispositif de traduction d'adresses NAT entre les adresses publique et privée du client T, le message de test est transmis jusqu'au client T. À sa réception, celui-ci renvoie un message de réponse « 200 Ok » qui, à son tour, traverse le dispositif de traduction d'adresses NAT avant de parvenir au serveur de signalisation SS. Celui-ci est alors informé que l'association est toujours active au sein du dispositif de traduction d'adresses NAT. Il peut alors en déduire que le délai d'expiration de l'association est supérieur au délai d'attente d₁'.
Il peut alors tester une valeur plus élevée pour ce délai.

En réponse au second message d'enregistrement « Register », le serveur de signalisation SS répond par un message de réponse « 200 Ok » contenant une durée de validité fixée à une deuxième valeur d₂, supérieure à la première valeur d₁.
Parallèlement, le serveur de signalisation SS attend durant un délai d₂' légèrement inférieur au deuxième délai de validité d₂ avant d'émettre un message de test vers le client T, par exemple un message « Options ».
Comme précédemment, si l'association est toujours active au sein du dispositif de traduction d'adresses NAT, le serveur de signalisation reçoit un message de réponse « 200 Ok » à son message de test.

Il peut à nouveau incrémenter les valeurs des délais, sachant que délai d'expiration du dispositif de traduction d'adresses NAT est donc encore supérieur au délai d'attente d₂'.

À réception du troisième message d'enregistrement « Register », le serveur de signalisation SS répond donc par un message de réponse « 200 Ok » contenant une durée de validité fixée à une troisième valeur d₃, supérieure à la deuxième valeur d₂.
Parallèlement, le serveur de signalisation SS attend durant un délai d₃' légèrement inférieur au troisième délai de validité d₃ avant d'émettre un message de test vers le client T, par exemple un message « Options ».

Dans l'exemple illustré par la figure 2, on suppose que ce troisième délai est supérieur au délai d'expiration du dispositif de traitement d'adresses NAT. Ce dernier ne peut alors pas transmettre le message de test « Options » vers le client T. Par conséquent, le serveur de signalisation SS ne reçoit jamais de message de réponse « 200 Ok ».
Au bout du délai de validité d₃, le terminal T transmet toutefois un message d'enregistrement « Register » qui crée une nouvelle association adresse publique/adresse privée au sein du dispositif de traduction d'adresses NAT. Ce message d'enregistrement « Register » est alors transmis à travers le dispositif de traduction d'adresses NAT jusqu'au serveur de signalisation SS.

Lorsqu'il reçoit ce message d'enregistrement « Register », le serveur de signalisation détermine que puisqu'il n'a pas reçu de message de réponse « 200 Ok » à son message de test « Options », le délai d'expiration du dispositif de traduction d'adresses NAT est inférieur à la dernière valeur testée d₃'. Plus précisément, il peut déterminer que la valeur approximative pour ce délai d'expiration est entre la valeur d₂' et la valeur d₃'.

### Exemples numériques

Les délais utilisés peuvent être conformes au tableau suivant :

| | |
|---|---|
| d₁ = 15 secondes | d₁' = 10 secondes |
| d₂ = 25 secondes | d₂' = 20 secondes |
| d₃ = 35 secondes | d₃' = 30 secondes |
| d₄ = 45 secondes | d₄' = 40 secondes |

Selon cet exemple, l'incrément est de 10 secondes entre deux valeurs consécutives. Il s'agit toutefois d'un exemple et il demeure tout à fait possible d'utiliser d'autres valeurs numériques.

Selon une première mise en oeuvre de l'invention, la phase d'apprentissage se termine lorsque aucune réponse n'est reçue à un message de test. Le serveur de signalisation SS peut alors considérer que la valeur précédente d₂ est la valeur optimale de la durée de validité des messages d'enregistrement « Register » et l'utiliser pour la suite. Il répond alors au message d'enregistrement « Register » avec la valeur d₂.
Il répondra avec cette valeur à tout nouveau message « Register » provenant du même terminal T, dans une étape d'utilisation.

De même il pourra utiliser cette même valeur d₂ avec tout nouveau terminal se situant derrière le même dispositif de traduction d'adresses NAT sans déclencher une phase d'apprentissage du délai d'expiration. Selon ce mode de réalisation, le serveur de signalisation SS dispose donc d'une table lui permettant d'associer à tout dispositif de gestion d'adresses NAT, un délai d'expiration approximatif. Ce mode de réalisation permet de s'affranchir des phases d'apprentissage de ces délais d'expiration et de passer directement à une étape d'utilisation et donc d'économiser des ressources du réseau en diminuant le nombre des messages qui sont échangés durant l'étape d'apprentissage.

Selon une seconde mise en oeuvre de l'invention, le serveur de signalisation peut rechercher à optimiser encore la valeur approximative à utiliser comme durée de validité des messages d'enregistrement « Register ». Il peut alors procéder par dichotomie et tester des durées d'attente et de validité intermédiaire, jusqu'à obtenir une approximation suffisante du délai d'expiration du dispositif de traduction d'adresses NAT. À ce moment uniquement, il passe dans une étape d'utilisation, où la valeur ainsi déterminée est utilisée dans son échange avec le client.

Selon l'invention, il existe donc un lapse de temps durant lequel le terminal T n'est pas accessible par le réseau de communication. En effet, dès lors que le message de test comporte une valeur supérieure au délai d'expiration du dispositif de traduction d'adresses, le terminal T est inaccessible jusqu'au prochain message d'enregistrement « Register ». Ainsi, si un message d'invitation « Invite » arrive au serveur de signalisation à destination du client T, il ne sera pas à même d'y répondre puisqu'il n'est à ce moment précis plus connecté au client T.
Ce lapse de temps est toutefois négligeable si les incréments entre deux valeurs consécutives dᵢ/dᵢ₊₁ sont suffisamment faibles.

Il peut toutefois être prévu que lors d'un appel vers ce client T durant ce lapse de temps, le serveur de signalisation re-achemine cet appel vers un serveur vocal, informant l'appelant que le client T sera disponible dans quelques secondes.

## Revendications

1. Serveur de signalisation (SS) comprenant des moyens de transmission de messages de signalisation SIP avec un client (T) à travers un dispositif de traduction d'adresses (NAT) réalisant une association temporaire d'une adresse publique à l'adresse privée dudit client, comportant des moyens pour recevoir des messages d'enregistrement dudit client, et pour adresser audit client une durée de validité au bout de laquelle ledit client doigt transmettre un nouveau message d'enregistrement audit serveur de signalisation (SS), **caractérisé en ce qu'**il dispose de moyens pour détecter que ledit client est situé derrière un dispositif de traduction d'adresse (NAT) et pour, dans cette situation, déterminer le délai approximatif d'expiration de ladite association temporaire par envoi successif de messages de test après un délai d'attente croissant jusqu'à détection de la terminaison de ladite association, et des moyens pour, à l'issue de cette détermination, transmettre audit client ce délai approximatif d'expiration comme durée de validité.

2. Serveur de signalisation selon la revendication précédente, dans lequel, durant une phase d'apprentissage, les messages de réponses aux messages d'enregistrement contiennent une durée de validité légèrement supérieure au délai d'attente avant l'émission du prochain message de test.

3. Serveur de signalisation selon la revendication précédente, dans lequel la phase d'apprentissage se termine lorsque aucune réponse n'est reçue à un message de test.

4. Serveur de signalisation selon l'une des revendications précédentes, dans lequel lesdits messages de test sont des messages « Options ».

5. Serveur de signalisation selon l'une des revendications précédentes, dans lequel les messages de réponses aux messages d'enregistrement sont des messages « 200 Ok » ; lesdites durées de validité étant contenues dans un champ « Expires », ou bien dans un paramètre « Expires » d'un champ « Contacts » desdits messages de réponse.

6. Serveur de signalisation selon l'une des revendications précédente, comportant en outre une table associant à tout dispositif de gestion d'adresses (NAT), un délai d'expiration approximatif et des moyens pour, lorsqu'il détecte qu'un client donné est situé derrière un dispositif de traduction d'adresses (NAT) donné, utiliser directement le délai d'expiration approximatif associé audit dispositif de traduction d'adresses donné dans ladite table.

7. Procédé de connexion d'un serveur de signalisation (SS) avec un client (T) à travers un dispositif de traduction d'adresses (NAT) réalisant une association temporaire d'une adresse publique à l'adresse privée dudit client, consistant à transmettre des messages d'enregistrement dudit client vers ledit serveur de signalisation, et a adresser audit client (T) une durée de validité au bout de laquelle ledit client (T) doit transmettre un nouveau message d'enregistrement audit serveur de signalisation (SS), **caractérisé en ce qu'**il comporte en outre une étape de détection, par ledit serveur de signalisation (SS), que ledit client (T) est situé derrière un dispositif de traduction d'adresse (NAT), et dans cette situation, une étape d'apprentissage consistant à déterminer le délai approximatif d'expiration de ladite association temporaire par envoi successif de messages de test après un délai d'attente croissant jusqu'à détection de la terminaison de ladite association, et une étape d'utilisation, à l'issue de cette détermination, consistant à transmettre audit client ce délai approximatif d'expiration comme durée de validité.

## Claims

1. A signaling server (SS) comprising means for transmitting SIP signaling messages with a client (T) through an address translation device (NAT) temporarily binding a public address to the private address of said client, comprising means for receiving registration messages from said client and for sending said client a validity period at the end of Which said client must transmit a new registration message to said signaling server (SS), said server **characterized in that** it has means for detecting whether said client is located behind an address translation device (NAT) and for determining, if this is the case, the approximate expiry time of said temporary binding by successively sending test messages after an increasing wait period until the termination of said binding is detected, and means for, upon the completion of this determination, transmitting this approximate expiry time to said client as a validity period.

2. A signaling server according to claim 1. wherein, during a learning phase, the reply messages for the registration messages contain a validity period slightly greater than the time to wait before sending the next test message.

3. A signaling server according to claim 2, wherein the learning phase ends when a test message has received no reply.

4. A signaling server according to any one of the preceding claims, wherein said test messages are "Options" messages.

5. A signaling server according to any one of the preceding claims, wherein the reply messages to the registration messages are "200 OK" messages; said validity periods being contained within an "Expires" field, or in an "Expires" parameter of a "Contacts" field of said reply messages,

6. A signaling server according to any one of the preceding claims, further comprising a table associating each address translation device (NAT) with an approximate expiry time so that, whenever it detects that a given client is located behind a given address translation device (NAT), it directly uses the approximate expiry time associated with said given address translation device in said table.

7. A method for connecting a signaling server (SS) with a client (T) through an address translation device (NAT) temporarily binding a public address to the private address of said client, consisting of transmitting registration messages from said client to said signaling server, and for sending said client (T) a validity period at the end of which said client (T) must transmit a new registration message to said signaling server (SS), **characterized in that** it further comprises a step of said signaling server (SS) detecting whether said client (T) is located behind an address translation device (NAT) and for determining, if this is the case, the approximate expiry time of said temporary binding by successively sending test messages after an increasing wait period until the termination of said binding is detected, and means for, upon the completion of this determination, transmitting this approximate expiry time to said client as a validity period,

## Patentansprüche

1. Signalisierungsserver (SS) mit Mitteln für die Übertragung von SIP-Signalisierungsnachrichten mit einem Client (T) über eine Adressenübersetzungsvorrichtung (NAT), welche eine befristete Zuordnung einer öffentlichen Adresse zu der privaten Adresse des besagten Client durchführt, mit Mitteln zum Empfangen von Registrierungsnachrichten des besagten Client, und zum Übertragen einer Gültigkeitsdauer an den besagten Client, nach deren Ablauf der besagte Client eine neue Registrierungsrachricht an den besagten Signalisterungsserver (SS) senden muss, **dadurch gekennzeichnet, dass** er über Mittel verfügt, um zu erkennen, dass der besagte Client hinter einer Adressenübersetzungsvorrichtung (NAT) angeordnet ist, und um in dieser Situation die annäherndene Ablauffrist der besagten befristeten Zuordnung durch aufeinanderfolgende Übertragungen von Testnactirichten nach einer zunehmenden Wartezeit bis zum Erkennen des Beendens der besagten Zuordnung zu bestimmen, und dass er über Mittel verfügt, um nach der erfolgten Ermittlung diese annähernde Ablauffrist als Gültigkeitsdauer an den besagten Client zu übertragen.

2. Signalisierungsserver nach dem vorstehenden Anspruch, wobei, während einer Erlemungsphase, die Antwortnachrichten auf die Registrierungsnachrichten eine Gültigkeitsdauer enthalten, welche leicht über der Wartezeit vor der Ausgabe der nächsten Testnachricht liegt.

3. Signalisierungsserver nach dem vorstehenden Anspruch, wobei die Erlernungsphase beendet wird, wenn keine Antwort auf eine Testnachricht empfangen wird.

4. Signalisierungsserver nach einem der vorstehenden Ansprüche, wobei die besagten Testnachrichten "Options"-Nachrichten sind.

5. Signalisierungsserver nach einem der vorstehenden Ansprüche, wobei die Antwortnachrichten auf die Registrierungsnachrichten "200 Ok"-Nachrichten sind; wobei die besagten Gültigkeitsdauern in einem Feld "Expires", oder in einem Parameter "Expires" eines Feldes "Contacts" der besagten Antworhiachrichten enthalten sind.

6. Signalisierungsserver nach einem der vorstehenden Ansprüche, weiterhin umfassend eine Tabelle, welche jeder Adressenverwaltungsvorrichtung (NAT) eine annähernde Ablauffrist zuordnet, sowie Mittel, um bei Erkennen, dass ein gegebener Client hinter einer gegebenen Adressenübersetzungsvorrichtung (NAT) angeordnet ist, direkt die annähernde Ablauffrist zu verwenden, welche der besagten gegebenen Adressenübersetzungsvorrichtung in der besagten Tabelle zugeordnet ist.

7. Verfahren zum Verbinden eines Signatisierungsservers (SS) mit einem Client (T) über eine Adressenübersetzungsvorrichtung (NAT), welche eine befristete Zuordnung einer öffentlichen Adresse zu der privaten Adresse des besagten Client durchführt, bestehend in der Übertragung von Registrierungsnachrichten von dem besagten Client an den besagten Signalisierungsserver, und in der Zuordnung einer Gültigkeitsdauer an den besagten Client (T), nach deren Ablauf der besagte Client (T) eine neue Registrierungsnachricht an den besagten Signalisierungsserver (SS) übertragen muss, **dadurch gekennzeichnet, dass** es weiterhin einen Schritt des Erkennens, durch den besagten Signalisierungsserver (SS), dass der besagte Client (T) hinter einer Adressenübersetzungsvorrichtung (NAT) angeordnet ist, und in dieser Situation einen Schritt des Erlernens, welcher darin besteht, die annähernde Ablauffrist der besagten befristeten Zuordnung durch aufeinanderfolgende Übertragungen von Testnachrichten nach einer zunehmenden Wartezeit bis zum Erkennen des Beendens der besagten Zuordnung zu bestimmen, und einen Schritt des Verwendens, im Anschluss an dieses Bestimmen, welcher darin besteht, diese annähernde Ablauffrist als Gültigkeitsdauer an den besagten Client zu übertragen.
